# EUROPÄISCHE PATENTSCHRIFT

(11) **EP 2 934 937 B1**
(45) Veröffentlichungstag und Bekanntmachung des Hinweises auf die Patenterteilung: **06.09.2017**
(21) Anmeldenummer: 13818201.9
(22) Anmeldetag: 11.12.2013
(51) Int. Cl.: B60K 26/02, G05G 5/03, G05G 1/44, F16H 19/00

(54) **PEDALEINHEIT FÜR EIN KFZ**
PEDAL UNIT FOR A MOTOR VEHICLE
UNITÉ PÉDALE POUR VÉHICULE AUTOMOBILE

(30) Priorität: 18.12.2012 DE 102012112514
(43) Veröffentlichungstag der Anmeldung: 28.10.2015
(73) Patentinhaber: AB Elektronik GmbH, 59368 Werne (DE)
(72) Erfinder: FALLAK, Klaus, 59368 Werne (DE); RUTKOWSKI, Marco, 59379 Selm-Bork (DE); GROTHE, Benjamin, 59075 Hamm (DE)
(74) Vertreter: Kalkoff & Partner
(86) Internationale Anmeldenummer: PCT/EP2013/076290
(87) Internationale Veröffentlichungsnummer: WO 2014/095537

(56) Entgegenhaltungen:
- WO-A1-2011/152557
- DE-A1-102010 063 409
- DE-U1- 8 706 142
- US-A1- 2012 255 385

## Beschreibung

Die Erfindung betrifft eine Pedaleinheit für ein KFZ. Insbesondere betrifft die Erfindung eine Pedaleinheit, bei der ein Elektromotor zur Erzeugung einer der Betätigung des Pedalelements entgegengerichteten Gegenkraft vorgesehen ist.

Bekannte Pedaleinheiten weisen ein feststehendes Grundelement und ein gegenüber diesem Grundelement in eine Betätigungsrichtung auslenkbares Pedalelement auf. Bei der bevorzugten Verwendung als Fahrpedal wird der Motor eines KFZ anhand der Betätigungsstellung des Pedalelements gesteuert. Dabei wird die Betätigungsstellung, d. h. die Stellung des Pedalelements zwischen einer Grundstellung (Leerlauf) und einer Maximalstellung (Vollgas), bei heute üblichen E-Gas-Pedaleinheiten mittels eines Sensors ermittelt und als elektrisches Signal an eine Steuereinheit übermittelt.

Es sind sogenannte Force-Feedback Pedale oder aktive Pedaleinheiten bekannt, mit denen mittels eines Aktuators zu Zwecken der Signalisierung an den Fahrer eine der Betätigungsrichtung entgegenwirkende Gegenkraft variabel einstellbar ist.

Bspw. zeigt die WO-A-03/039899 eine Anzahl verschiedener Ausführungsformen von Pedaleinheiten mit zusätzlicher Rückstellkraft. Durch einen elektromechanischen Aktuator wird bei der Abweichung der Ist-Geschwindigkeit eines Fahrzeuges von einer Soll-Geschwindigkeit eine zusätzliche Stellkraft in einem Pedalelement bereitgestellt. Dabei soll unter keinen Umständen der Aktuator selbständig die Geschwindigkeit des Fahrzeugs erhöhen und zudem gewährleistet sein, dass der Fahrzeugführer stets die volle Kontrolle über das Fahrzeug behält und dementsprechend das Fahrpedal auch entgegen der zusätzlichen Stellkraft betätigen, diese also "übertreten" kann.

EP 1602 520 A1 beschreibt eine Pedaleinheit mit einem Pedalelement, das mit einem Drehelement gekoppelt ist. Zur Erzeugung einer Gegenkraft ist ein Torque-Motor vorgesehen, der am Stator über eine Anzahl von Feldspulen und am Rotor über Permanentmagnetelemente verfügt. Das Drehelement ist über eine Freilauf-Kopplungseinheit mit dem Rotor ohne ein Getriebe direkt verbunden. Die Freilauf-Kopplungseinheit koppelt den Rotor und das Drehelement bei Bewegung in Betätigungsrichtung, lässt aber eine getrennte Bewegung entgegen der Betätigungsrichtung zu.

Die EP-A-2578431 beschreibt ein Fahrpedal, bei dem ein Rotationsteil drehbar angeordnet ist. Eine gebogene Oberfläche steht in Kontakt mit einem Element mit konvex gebogener Außenfläche. Das Element weist einen Zahnbereich auf, der mit einem Untersetzungsgetriebe gekoppelt ist.

Die DE 10 2010 063 409 A1 beschreibt eine Fahrpedalvorrichtung mit einem Pedalelement, das gegenüber einem Grundelement beweglich angeordnet ist. Ein Drehelement ist am Grundelement angeordnet und mit dem Pedalelement so gekoppelt, dass eine Bewegung des Pedalelements zu einer Drehung des Drehelements führt. Um eine Verstellbarkeit der Betätigungscharakteristik zu ermöglichen, ist am Grundelement ein Kulissenelement vorgesehen. Bei der Betätigung des Pedalelements kommt an einer Eingriffsstellung das Drehelement mit dem Kulissenelement in Eingriff. Für eine weitere Betätigung ist ab der Eingriffsstellung eine Kraftschwelle der Betätigungskraft zu überwinden. Das Kulissenelement ist um die Drehachse des Drehelements schwenkbar und mittels eines Spindeltriebs verstellbar.

In der US 2012/0255385 A1 umfasst eine Getriebevorrichtung ein Antriebszahnrad und ein angetriebenes Zahnrad. Das Antriebszahnrad umfasst erste und zweite Verzahnungsbereiche, die zueinander koaxial angeordnet sind. Der Zahnradius der Verzahnungsbereiche weicht voneinander ab. Die Verzahnungsbereiche sind in Umfangsrichtung beabstandet voneinander angeordnet. Das angetriebene Zahnrad umfasst einen Verzahnungsbereich, der mit dem ersten Verzahnungsbereich im Eingriff steht.

In der DE 87 06 142 U1 ist eine Verstelleinrichtung einer Belüftungseinrichtung für Personenkraftwagen beschrieben. Der Antrieb erfolgt durch zwei Zahnräder, die in einem Abstand zueinander gelagert und mit Zahnkranzsegmenten eines Verstellrades im Eingriff stehen. Die Zahnkranzsegmente liegen sich diametral gegenüber und sind jeweils als frei verlaufende Bogenabschnitte ausgebildet.

Es ist Aufgabe der Erfindung, eine aktive Pedaleinheit mit einem Elektromotor zur Beeinflussung der Gegenkraft vorzuschlagen, mit der durch einen einfachen und kompakten Aufbau der zur Verfügung stehende Raum gut genutzt wird.

Diese Aufgabe wird gelöst durch eine Pedaleinheit gemäß Anspruch 1. Abhängige Ansprüche beziehen sich auf vorteilhafte Ausführungsformen der Erfindung.

Die erfindungsgemäße Pedaleinheit umfasst ein Drehelement, bevorzugt einen Drehhebel, der mit einem Pedalelement, bevorzugt einer Pedalplatte, so gekoppelt ist, dass das Drehelement sich bei Auslenkung des Pedalelements gegenüber einem festen Grundelement dreht. Diese Kopplung ist bspw. über einen Koppelhebel möglich.

Dabei ist erfindungsgemäß ein Elektromotor zur Erzeugung einer Kraft vorgesehen, so dass durch Ansteuerung des Elektromotors eine (zusätzliche) Gegenkraft gegen die Betätigung des Pedalelements aufgebracht werden kann. Eine solche Gegenkraft, die i. A. zusätzlich zu der Kraft eines Rückstellelements wirkt, ist durch den Bediener spürbar und dient zur Signalisierung verschiedener Betriebszustände des KFZ, bspw. überhöhte Geschwindigkeit, ungünstiger Kraftstoffverbrauch etc. Die Kraft ist dabei stets der Betätigungsrichtung entgegengesetzt, ist also zur Rückstellung des Pedalelements in Richtung auf eine Grundstellung hin gerichtet.

Dabei ist erfindungsgemäß zur Kopplung zwischen dem Drehelement und dem Elektromotor ein Getriebe vorgesehen. Die Kopplung ist dabei bevorzugt so, dass die Motorwelle mindestens bei Bewegung in Betätigungsrichtung synchron mit dem Drehelement gekoppelt ist. Dabei wird unter "synchron" nicht die gleiche Drehzahl verstanden (im Gegenteil ist das Getriebe bevorzugt ein Untersetzungsgetriebe, das eine höhere Drehzahl am Motor in eine geringere Drehzahl am Drehelement umsetzt), sondern es wird eine Kopplung verstanden, bei der jede Bewegung des Drehelements in Betätigungsrichtung ohne Schlupf und/oder zwischengeschalteten Freilauf zu einer Bewegung der Motorwelle führt. Dabei ist die synchrone Kopplung, wie unten näher erläutert wird, aber bevorzugt allein in Betätigungsrichtung gegeben; aus Sicherheitsgründen wird bevorzugt der Motor vom Drehelement in entgegengesetzter Richtung durch ein Freilauf-Kopplungselement entkoppelt.

Erfindungsgemäß ist das Getriebe mindestens zum Teil als Zahnradgetriebe ausgebildet, wobei mindestens ein speziell gestaltetes Zahnradelement verwendet wird. Dabei wird, wie unten auch anhand bevorzugter Ausführungsformen gezeigt, unter einem "Zahnradelement" jedes um eine Achse drehbare Bauteil mit einer Verzahnung verstanden, die für eine Kraftübertragung zum Eingriff in eine Gegenverzahnung eines anderen Elements vorgesehen oder geeignet ist. Es muss sich nicht um ein Zahnrad im herkömmlichen Sinn handeln, d.h. nicht zwangsläufig eine runde Form aufweisen. Im Gegenteil unterscheidet sich das erfindungsgemäß vorgesehene Zahnradelement in seiner Form von herkömmlichen Zahnrädern.

Das Zahnradelement umfasst mindestens einen ersten und einen zweiten Verzahnungsbereich, die verschiedene Verzahnungsradien aufweisen. Ausgehend von einer Achse, um die das speziell ausgebildete Zahnradelement drehbar ist, umfasst es starr miteinander verbunden (und bevorzugt einstückig miteinander ausgeführt) den ersten und zweiten Verzahnungsbereich. Dabei erstreckt sich jeder der beiden Verzahnungsbereiche nicht über einen vollen Umfang, sondern jeweils nur über einen Teilumfang, d. h. einen Teil eines Vollkreises.

Bei dem erfindungsgemäß besonders ausgebildeten Zahnradelement liegen der erste und der zweite Verzahnungsbereich in einer Ebene, d. h. dass sich in einer senkrecht zur Drehachse des Zahnradelements angeordneten Ebene sowohl mindestens ein Teil der Verzahnung des ersten Verzahnungsbereiches als auch mindestens ein Teil der Verzahnung des zweiten Verzahnungsbereiches befinden.

Mit einem solchermaßen ausgebildeten Zahnradelement lässt sich das Getriebe besonders kompakt bauen. Das Zahnradelement dient durch die unterschiedlichen Verzahnungsradien (bei bevorzugt gleicher Zahnteilung) als eine Getriebestufe, in der bevorzugt eine Untersetzung erfolgt, d. h. dass im Kraftfluss eine höhere Drehzahl an der motorseitigen Ankopplung des Zahnradelements in eine geringere Drehzahl auf der drehelementseitigen Ankopplung umgesetzt wird.

Diese Umsetzung erfolgt dabei in einer Ebene, so dass das Getriebe besonders kompakt sein kann und der Bauraum gut ausgenutzt wird. Die Verwendung von Verzahnungsbereichen, die sich nur über Teilumfänge erstrecken sorgt ebenfalls für eine kompakte Bauweise und spart Material und Gewicht. Sie ist möglich, weil der Betätigungsbereich des Pedalelements zwischen einer Grundstellung (Leerlauf) und einer Vollbetätigungsstellung (Vollgas) klar definiert und deutlich eingeschränkt ist, bspw. auf Betätigungswinkel von 45° oder weniger. Entsprechend kann auch das Getriebe so ausgelegt werden, dass über den gesamten Betätigungsbereich keine vollständige Umdrehung des Zahnradelements erfolgt und so die Verwendung von lediglich Teilumfängen ausreicht.

Dabei kann das speziell geformte Zahnradelement eine deutliche Abstufung innerhalb des Getriebes bilden. Beispielsweise kann der zweite Verzahnungsradius im Bereich des 1,3- bis 3-fachen des ersten Verzahnungsradius liegen, bevorzugt beim 1,5 - 2,5-fachen. Der von den Verzahnungsbereichen jeweils abgedeckte Teilumfang kann bspw. 45° - 270°, bevorzugt 90°-220° ausmachen. Dabei ist, wie aus den bevorzugten Ausführungsformen deutlich wird, auch eine Überlappung möglich, d. h. dass die Summe der Teilumfänge größer als 360° ist. Hierfür kann eine hinterschneidende Anordnung des ersten und zweiten Verzahnungsbereichs dienen.

Insgesamt ermöglicht die Erfindung eine Pedaleinheit mit einfachem Aufbau, bei der sich trotz kompakter Abmessungen eine gute Einkopplung der Gegenkräfte des Elektromotors erreichen lässt.

Gemäß einer Weiterbildung der Erfindung umfasst das Getriebe neben dem ersten Zahnradelement mit zwei Verzahnungsbereichen, die sich jeweils nur über einen Teilumfang erstrecken, auch ein zweites Zahnradelement, bei dem sich mindestens ein Verzahnungsbereich nur über einen Teilumfang erstreckt. Dies wird ebenfalls ermöglicht durch den bekannten, beschränkten Bewegungsbereich und erlaubt einen besonders kompakten Aufbau mit Materialeinsparung. Das zweite Zahnradelement kann, insbesondere wenn es gegenüber dem ersten Zahnradelement drehelementseitig angeordnet ist, einen Verzahnungsbereich mit geringem Teilumfang von bspw. nur 15 - 35° umfassen, bspw. in Form eines Verzahnungshebels.

Gemäß einer besonders bevorzugten Ausführungsform ist vorgesehen, dass zwei Zahnradelemente miteinander in ihren Verzahnungsbereichen in Eingriff stehen, wobei zur Vergrößerung des Bewegungsbereiches ein Teil eines ersten Zahnradelements in einer Ausnehmung eines zweiten Zahnradelements aufgenommen werden kann. Dabei sind die Zahnradelemente bevorzugt als Stirnradelemente mit zueinander parallel im Abstand angeordneten Achsen vorgesehen. Weiter bevorzugt liegen die Verzahnungsbereiche in einer gemeinsamen Ebene. Am zweiten Zahnradelement ist eine Ausnehmung gebildet in einem Bereich, der bevorzugt außerhalb des im Eingriff stehenden Verzahnungsbereiches liegt. In mindestens einer Getriebestellung kann dann ein Teil des ersten Zahnradelements, bevorzugt ein Ende von dessen Verzahnungsbereich, in die am zweiten Zahnradelement gebildete Ausnehmung aufgenommen werden. Dies ermöglicht einen besonders kompakten Aufbau und dennoch einen erhöhten Bewegungsbereich.

Bevorzugt ist eine Getriebekonstruktion, bei der das Getriebe eine erste Zahnradpaarung aufweist zwischen einem Ritzel des Motors und einem ersten Zahnradelement. Weiter weist das Getriebe bevorzugt eine zweite Zahnradpaarung zwischen dem ersten Zahnradelement und einem zweiten Zahnradelement auf. Weiter bevorzugt ist das zweite Zahnradelement mit dem Drehelement gekoppelt, bevorzugt in einer gemeinsamen Achse. Das oben genannte erste Zahnradelement ist dabei bevorzugt das erfindungsgemäß mit zwei unterschiedlichen Verzahnungsbereichen ausgebildete Zahnradelement. Ein solcher Aufbau hat sich bei besonders kompaktem Aufbau als für die Ankopplung eines Motors an ein Pedalelement geeignet erwiesen.

In einer ersten Ausführungsform sind die Verzahnungsbereiche am Zahnradelement als zwei äußere Stirnradverzahnungen mit unterschiedlichem Verzahnungsdurchmesser gebildet. In einer alternativen Ausgestaltung kann mindestens einer der Verzahnungsbereiche als Innenverzahnung ausgebildet sein. Dies ermöglicht, insbesondere im Zusammenspiel mit einem innerhalb der Innenverzahnung aufgenommenen Ritzel, eine besonders kompakte Anordnung.

Gemäß einer Weiterbildung der Erfindung ist das Getriebe bevorzugt als mindestens zweistufiges Getriebe ausgebildet. An mindestens einer Stufe des Getriebes, bevorzugt an mehreren und besonders bevorzugt an allen Stufen kann eine mindestens zum Teil schräge Verzahnung vorgesehen sein. Dies schließt eine Schrägverzahnung ebenso ein wie bspw. eine V-Verzahnung, bei der sich gegenüber der Schrägverzahnung der Vorteil ergibt, dass keine Axialkräfte auftreten. Bei einer Schräg- oder V-Verzahnung ergibt sich weniger Spiel. Zudem hat sich erwiesen, dass die Geräuschentwicklung geringer ist.

Das Getriebe ist bevorzugt als Untersetzungsgetriebe mit einem Untersetzungsverhältnis von mindestens 2:1, bevorzugt 5: bis 30: ausgelegt.

Gemäß einer Weiterbildung der Erfindung ist ein Freilauf-Kopplungselement zwischen dem Drehelement und der Motorwelle vorgesehen. Mit dem Freilauf-Kopplungselement wird eine Kopplung in einer ersten Drehrichtung und eine Entkopplung (Freilauf) in einer zweiten Drehrichtung des Drehelements erzielt. So kann eine Kraft- bzw. Drehmomentübertragung vom Motor auf das Drehelement nur in einer Richtung erfolgen, nämlich derart, dass der Motor der Bewegung des Drehelements in Betätigungsrichtung eine Gegenkraft bzw. ein Gegenmoment entgegensetzt. Hingegen ist durch das Freilauf-Kopplungselement keine Kraft- bzw. Momentübertragung derart möglich, dass der Motor das Drehelement in Betätigungsrichtung beaufschlagt, also der Motor "Gas gibt".

Die Freilauf-Kopplungseinheit ist bevorzugt auf Seiten des Drehelements, also zwischen diesem und dem Getriebe vorgesehen. Alternativ kann das Freilauf-Kopplungselement auch innerhalb des Getriebes oder motorseitig vorgesehen sein.

Bevorzugt ist das Freilauf-Kopplungselement so aufgebaut, dass eine mit dem Drehelement gekoppelte Abtriebsanlagefläche und eine mit dem Motor gekoppelte Antriebs-Anlagefläche bei Kraftübertragung entgegen der Betätigungsrichtung aneinander anliegend, aber bei Kraftübertragung in Betätigungsrichtung des Drehelements voneinander getrennt werden können. Die Anlageflächen können dabei an einem, bevorzugt mindestens zwei ineinander verzahnten Gabelelementen vorgesehen sein. Um eine definierte Kopplung zu erhalten, ist bevorzugt ein Federelement vorgesehen, mit dem die Anlageflächen zusammengehalten sind.

Besonders bevorzugt ist, dass mindestens ein Teil des Freilauf-Kopplungselements mit einem Zahnradelement des Getriebes starr gekoppelt oder sogar einstückig ausgebildet ist. Dies kann insbesondere ein Verzahnungshebel sein, der nur in einem Teilumfang über einen Verzahnungsbereich verfügt.

Der Elektromotor ist bevorzugt bürstenlos ausgeführt. Besonders bevorzugt ist ein BLDC-Motor (bürstenloser Gleichstrommotor) mit einem Permanentmagnet-Läufer und einer Anzahl von Statorspulen. Eine Ansteuerschaltung für die Statorspulen ist bevorzugt ein Teil der Pedaleinheit.

Das Getriebe kann bevorzugt in einem Gehäuse gekapselt sein, um es vor äußeren Verschmutzungen zu schützen. Dabei kann insbesondere ein vom Gehäuse des Grundelements separates Gehäuse vorgesehen sein, das z.B. nur die Zahnradelemente umschließt.

Zur Feststellung der Betätigungsposition ist bevorzugt ein Pedalsensor vorgesehen. Dieser ist gemäß einer Weiterbildung der Erfindung am Drehelement angebracht. Durch dessen synchrone Kopplung mit dem Pedalelement kann so die Betätigungsstellung sicher abgefragt werden.

Nachfolgend wird eine Ausführungsform anhand der Zeichnungen näher beschrieben. Dabei zeigen:
- Fig. 1: eine perspektivische Ansicht einer Ausführungsform einer Pedaleinheit;
- Fig. 2: eine perspektivische Explosionsdarstellung von Funktionselementen der Pedaleinheit aus Fig. 1, darunter eine aktive Kassette;
- Fig. 3: eine perspektivische, vergrößerte Ansicht von Funktionselementen der Pedaleinheit aus Fig. 1, Fig. 2 mit der aktiven Kassette;
- Fig. 4: eine perspektivische Explosionsansicht von Teilen der Pedaleinheit aus Fig. 1-3;
- Fig. 5: eine perspektivische Darstellung von Zahnradelementen eines Getriebes der aktiven Kassette;
- Fig. 6a,6b: eine Draufsicht auf die Zahnradelemente aus Fig. 5 in verschiedenen Getriebestellungen und
- Fig. 7a, 7b: in perspektivischer Darstellung eine alternative Ausführungsform von Zahnradelementen.

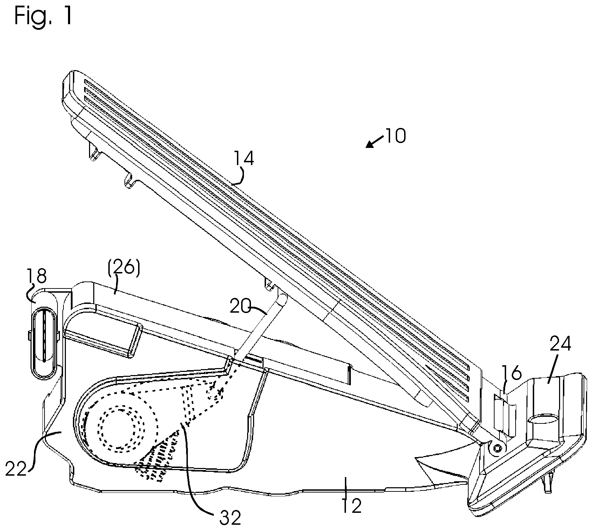

Fig. 1 zeigt in perspektivischer Darstellung eine Pedaleinheit 10, mit einem Grundelement 12 und ein daran auslenkbar angebrachtes Pedalelement 14. Im gezeigten Beispiel eines stehenden Pedals ist das Pedalelement 14 als aufrechtstehende, in einem unteren Gelenk 16 schwenkbar am Grundelement 12 befestigte Pedalplatte ausgebildet. In einer alternativen Ausgestaltung (nicht dargestellt) kann das Pedalelement auch in an sich bekannter Weise als hängendes Pedal ausgebildet sein.

Das Grundelement 12 ist zur festen Anbringung im Fußraum eines KFZ vorgesehen. Über einen Steckeranschluss 18 wird die elektrische Verbindung der Kfz-Elektronik zu einem Sensor für die Betätigungsstellung und einem Motor zur Erzeugung einer variablen Gegenkraft, die beide im Folgenden näher beschrieben werden, hergestellt.

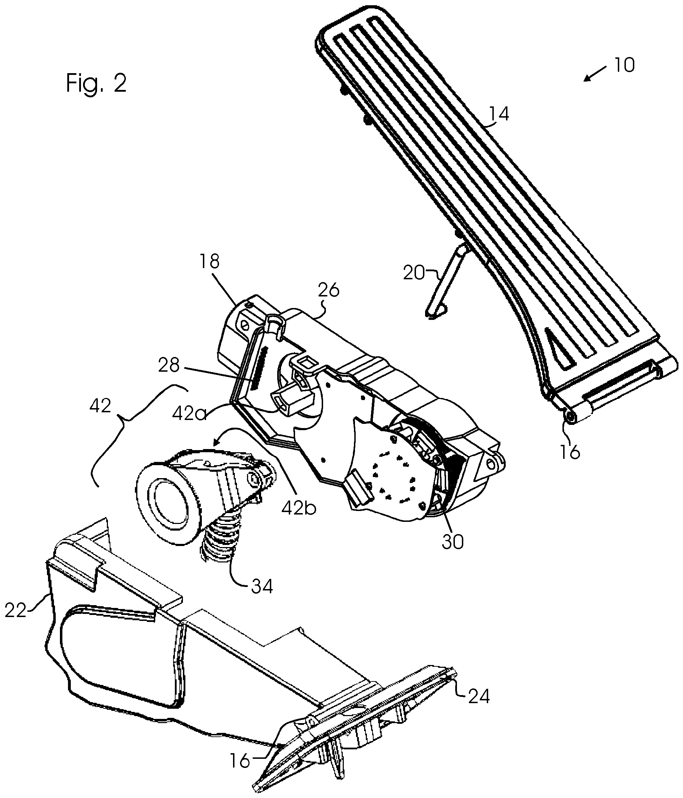

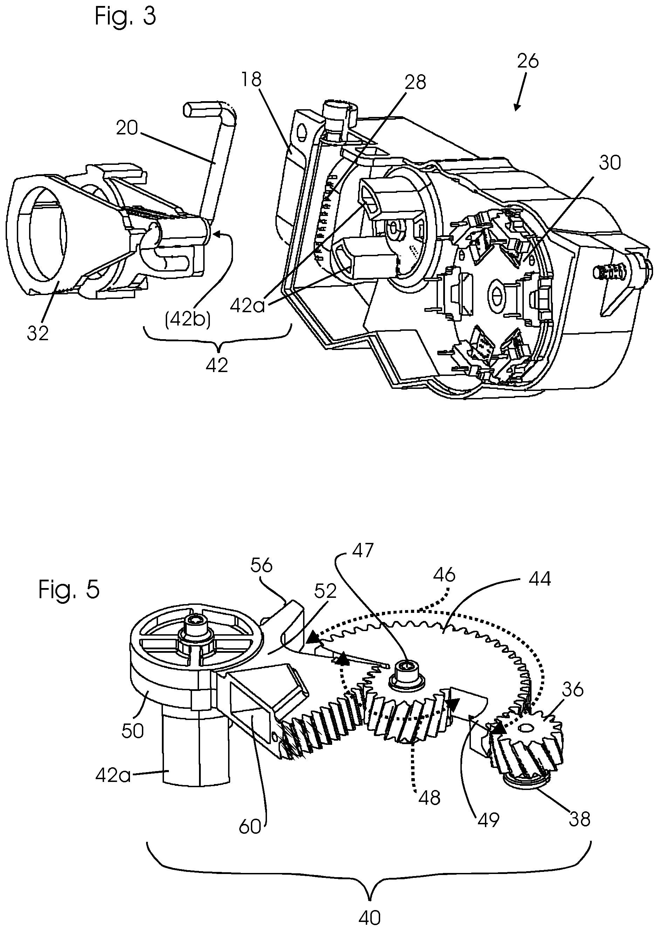

Das Grundelement 12 umfasst im Wesentlichen ein Gehäuse 22, das mit einer Grundplatte 24, die das Scharnier 16 trägt einstückig als Kunststoffteil ausgebildet ist (Fig. 2) und eine darin eingesetzte aktive Kassette 26, die einen Pedalsensor 28 (Fig. 2) und einen elektrischen Motor 30 (Fig. 2, Fig. 3) aufweist. Aufbau und Funktion der aktiven Kassette 26, die zusätzlich auch die benötigte Steuer- und Auswerteelektronik und den Stecker 18 umfasst, wird unten im Detail beschrieben.

Innerhalb des Gehäuses 22 des Grundelements 12 ist ein mit dem Pedalelement 14 über einen Stellhebel 20 gekoppelter Drehhebel 32 mit einer Rückstellfeder 34 angeordnet (Fig. 2). Wie bspw. aus Fig. 3 ersichtlich ist der Koppelhebel 20 gelenkig mit dem Drehhebel 32 so verbunden, dass jede Schwenkbewegung des Pedalelements 14 zu einer synchronen Drehbewegung des Drehhebels 32 führt. Somit kann die Betätigungsstellung des Pedalelements 14 mit einem Sensor 28, der die Stellung des Drehhebels 32 abfragt, ermittelt werden.

Durch die Rückstellfeder 34 wird der Drehhebel 32 und damit auch das Pedalelement 14 in eine Grundstellung zurückgestellt, solange keine ausreichende Betätigungskraft wirkt.

Die Force-Feedback-Funktion der Pedaleinheit 10 wird durch die aktive Kassette 26 erfüllt. Diese umfasst ein Kassettengehäuse, in dem die in Fig. 3 - 5 dargestellten Funktionselemente angeordnet sind, nämlich ein Elektromotor 30, ein Getriebe 40 und eine Freilauf-Kopplung 42.

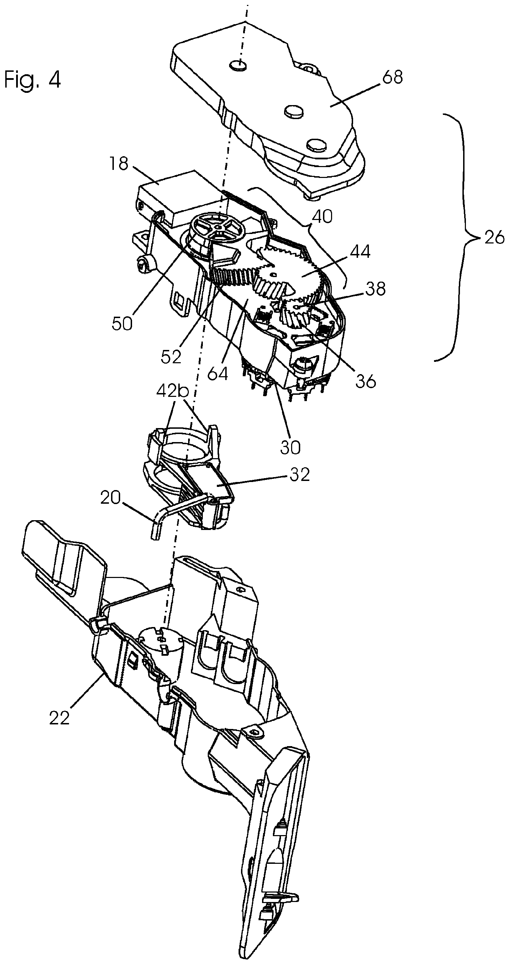

Das Getriebe 40 ist dabei innerhalb eines separaten Kassettengehäuses gekapselt und somit gegenüber Verschmutzungen unempfindlich. Wie aus Fig. 4 ersichtlich ist die aktive Kassette 26 durch einen Deckel 68 abgedeckt.

Der Motor 30 weist auf seiner Motorwelle 38 ein Antriebsritzel 36 auf, das mit dem Getriebe 40 gekoppelt ist. Dabei steht das Ritzel 36 mit einem speziell ausgebildeten Zahnradelement 44 im Eingriff. Ein Koppelelement 50 weist ein spezielles Zahnradelement 52 auf, das als Verzahnungshebel 52 ausgebildet ist, und das an einem Verzahnungsbereich mit dem Zahnradelement 44 in Eingriff steht.

Das Getriebe 40 ist, wie insbesondere aus Fig. 4 ersichtlich ist, auf einer Platte 64 aufgebaut, durch die es vom restlichen Innenraum der Pedaleinheit 10 getrennt ist. Insbesondere trennt die Platte 64 den Bereich der Zahnradpaarungen des Getriebes 40 von dem Bereich des Drehhebels 32 mit dem Koppelhebel 20. Da der Koppelhebel 20 durch eine Öffnung des Gehäuses 22 nach Außen ragt, können von dort u.U. Verschmutzungen in das Gehäuse 22 eintreten. Durch die Platte 64 ist sichergestellt, dass die Verschmutzungen nicht ins Getriebe 40 eindringen können, was sich im Betrieb durch deutlich veränderte Bedienungskräfte bemerkbar machen würde. Durch die Kapselung zwischen der Platte 64 und dem Deckel 68 ist das Getriebe 40 vor solchen Einflüssen geschützt.

Innerhalb des Getriebes 40 umfasst das Zahnradelement 44, wie insbesondere aus Fig. 5 ersichtlich ist, keine einheitliche Verzahnung über seinen gesamten Umfang, sondern einen ersten Verzahnungsbereich 46 und einen zweiten Verzahnungsbereich 48. Der erste Verzahnungsbereich 46 weist dabei einen größeren, im gezeigten Beispiel etwa doppelt so großen Verzahnungsradius auf wie der zweite Verzahnungsbereich 48, ausgehend von der Drehachse 47 des Zahnradelements 44. Beide Verzahnungsbereiche 46, 48 erstrecken sich nur jeweils über einen Teil des Gesamtumfanges, wobei in der gezeigten Ausführung der erste Verzahnungsbereich 46 einen Teilumfang von ca. 190° und der zweite Verzahnungsbereich 48 einen Teilumfang von ca. 210° abdeckt. Dabei weist der erste Verzahnungsbereich ein vorspringendes Ende 49 auf.

Die Verzahnung in den Verzahnungsbereichen 46, 48 weist gleiche Zahnteilung auf, so dass das Zahnradelement 44 innerhalb des Getriebes 40 eine Untersetzungsstufe bildet.

Dabei liegen die Verzahnungsbereiche 46, 48 in einer Ebene. Wie dargestellt ist somit das gesamte Getriebe 40 in einer Ebene auf einer Tragplatte 64 aufgebaut. Die Tragplatte 64 ist dabei aus Aluminium, so dass einerseits en stabiler Aufbau und andererseits eine gute Wärmeableitung von Verlustärme am Motor 30 ermöglicht werden.

Der Verzahnungshebel 52 weist ebenfalls einen sich nur über einen Teilumfang von im gezeigten Beispiel ca. 45° erstreckenden Verzahnungsbereich auf. Er ist einstückig ausgebildet mit dem Koppelelement 50, wie insbesondere aus Fig. 4, Fig. 5 ersichtlich ist.

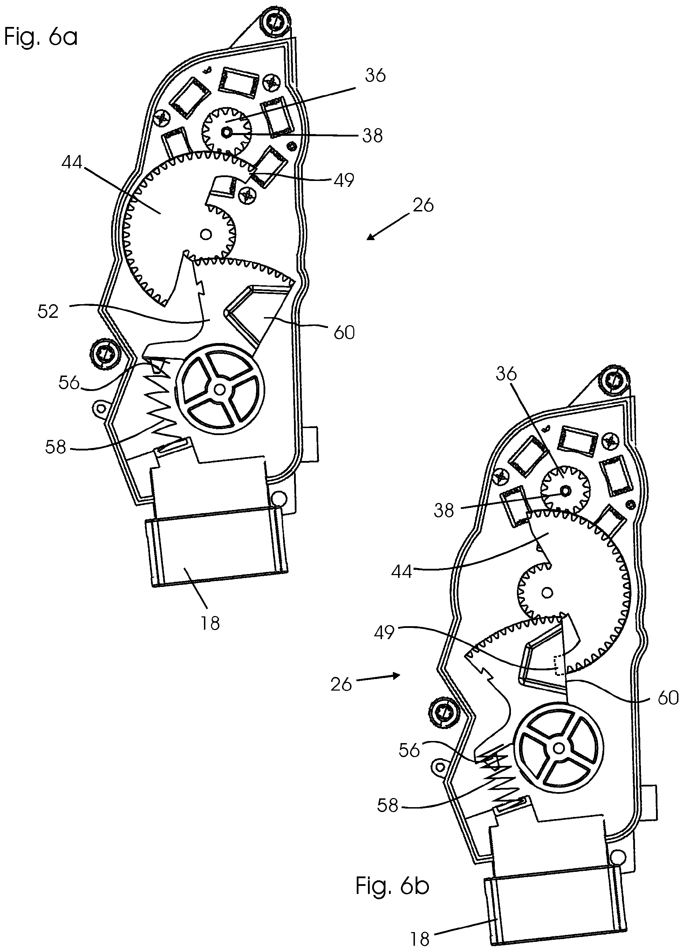

Am Verzahnungshebel 52 ist eine Aufnahme 56 für eine Rückstellfeder 58 (Fig. 6a, 6b) vorgesehen. Weiter ist am Verzahnungshebel 52 eine in der gezeigten Ausführung als Tasche 60 ausgebildete Ausnehmung vorgesehen, die eine Eintrittsöffnung in Drehrichtung aufweist.

Das Koppelelement 50 ist Teil der Freilauf-Kopplung 42. Dabei ist die Freilauf-Kopplung 42 wie insbesondere aus Fig. 2, Fig. 3 ersichtlich als Gabelkopplung ausgebildet mit einem ersten Gabelelement 42a auf Seiten des Koppelelements 50 und einem zweiten Gabelelement 42b auf Seiten des Drehhebels 32. Im zusammengefügten Zustand sind die Gabelelemente 42a, 42b verzahnt ineinander angeordnet. Bei Betätigung des Pedalelements 14 und entsprechender Drehung des Drehhebels 32 entgegen der Wirkung der Rückstellfeder 34 dreht sich das zweite Gabelelement 42b in Fig. 3 links herum. Dabei kommt es zu einer Mitnahme des ersten Gabelelements 42a durch Anlage von ersten Anlageflächen auf Seiten des Koppelelements 50 an zweiten Anlageflächen auf Seiten des zweiten Gabelelements 42b.

Allerdings sind die Abstände zwischen den Gabelelementen 42a, 42b so bemessen, dass diese Mitnahme nur bei Bewegung des Drehhebels 32 in Betätigungsrichtung erfolgt, nicht aber in umgekehrter Richtung. Wenn sich nämlich der Drehhebel 32 bei nachlassen der Betätigung zurückstellt oder das Koppelelement 50 in Betätigungsrichtung, d. h. in Fig. 4 links herum gedreht wird, trennen sich die ersten und zweiten Anlageflächen, so dass ein Freilauf zwischen dem Koppelelement 50 und dem Drehhebel 32 entsteht. Hierdurch ist sichergestellt, dass eine Kopplung zwischen dem Koppelelement 50 und dem Drehhebel 32 stets nur entgegen der Betätigungsrichtung erfolgen kann - ein Niederhalten des Pedalelements 14 durch das Koppelelement 50 in einer betätigten Stellung ist ebenso ausgeschlossen wie eine eigenständige Betätigung des Pedalelements 14 durch das Koppelelement 50.

Der Elektromotor 30 ist somit allein dazu vorgesehen, zusätzlich zu dem Widerstand, den die Rückstellfeder 34 entgegen der Betätigung des Pedalelements 14 aufbringt, eine weitere Gegenkraft zu erzeugen. Je nach Ansteuerung des Motors 30 ist diese Gegenkraft einstellbar, d. h. sowohl der Kraftbetrag als auch die Betätigungsstellung, in der sie wirksam wird, ist variabel und durch elektrische Ansteuerung des Motors 30 vorgebbar.

Bei Betätigung des Pedalelements 14 in Betätigungsrichtung, d. h. beim Herunterdrücken, bewegt sich wie oben erläutert durch die Kopplungswirkung der Freilauf-Kopplung 42 in dieser Richtung das Koppelelement 50 synchron mit dem Drehhebel 32. Diese Drehbewegung wird durch das Getriebe 40 auf die Motorwelle 38 übertragen.

Innerhalb des Getriebes 40 erfolgt die Übertragung des Drehmoments über den einstückig mit dem Gabelelement 42a ausgebildeten Verzahnungshebel 52 auf den zweiten Verzahnungsbereich 48 des speziell ausgebildeten Zahnradelements 44 und von dessen ersten Verzahnungsbereich 46 auf das Ritzel 36 an der Motorwelle 38.

Fig. 6a, 6b zeigt dabei zwei verschiedene Stellungen des Getriebes 40. Dabei entspricht die erste in Fig. 6a dargestellte Getriebestellung etwa einer Leerlaufstellung des Pedalelements 14, während die zweite in Fig. 6b dargestellte Getriebestellung etwa einer Vollgasposition entspricht, d.h. durch den Hebel 20 ist der Drehhebel 32 dort maximal heruntergedrückt. Der hiermit gekoppelte Verzahnungshebel 52 befindet sich in der ersten Getriebeposition im Bereich seines rechten, in der zweiten Getriebeposition im Bereich seines linken Anschlags.

In der zweiten in Fig. 6b dargestellten Getriebestellung ist der vorspringende Bereich 49 des ersten Verzahnungsbereiches 46 des Zahnradelements 44 in der Tasche 60 am Verzahnungshebel 52 aufgenommen. So wird bei geringem Bauraum ein noch relativ großer Schwenkbereich ermöglicht.

Die Feder 58 bringt dabei jeweils eine zusätzliche Rückstellkraft auf, die über die Kopplung 42 auch auf das Pedalelement 14 wirkt. Vor allem bewirkt die Feder 58, dass die Zahnradpaarungen jeweils unter Spannung stehen und Zahnflankenspiel so reduziert wird.

Die Verzahnung ist dabei an beiden Eingriffspaarungen als Schrägverzahnung ausgebildet. Hierdurch wird Spiel verringert und Geräuschbildung vermieden.

Durch das Getriebe 40 erfolgt dabei eine deutliche Untersetzung der Drehbewegung des Koppelelements 50 von im gezeigten Beispiel ca. 1:20. Durch die Kopplungswirkung der Freilauf-Kopplung 42 ist die Drehung an der Motorwelle 38 in Betätigungsrichtung synchron mit der Drehung des Drehhebels 32.

Durch die in Fig. 3-5 dargestellte Konstruktion erfolgt dabei eine Beeinflussung der für die Bewegung in Betätigungsrichtung benötigten Kraft entsprechend der Ansteuerung des Motors 30. Durch entsprechende Bestromung des Motors 30 kann dann eine steuerbare Gegenkraft gegen die "Rückwärtsdrehung" der Motorwelle 38 aufgebracht werden. Die Ansteuerung des Motors 30 wird nach entsprechendem elektrischen Signal am Steckeranschluss 18 durch eine Motorsteuerung 54 vorgegeben. Bei dem Motor 30 handelt es sich um einen BLDC-Motor, d. h. einen bürstenlosen Elektromotor mit einem Permanentmagnet-Rotor und einer Anzahl von im dargestellten Beispiel sechs Feldspulen. Durch entsprechende Ansteuerung seitens der Motorsteuerung 54 erzeugt der Motor 30 ein Drehmoment, das der für die Betätigung notwendigen Drehrichtung der Motorwelle 38 entgegengerichtet ist und so zu einer - je nach Ansteuerung - variablen Gegenkraft gegen die Betätigung führt.

Durch geeignete Ansteuerung des Motors 30 sind verschiedene Kraftverläufe vorgebbar, abhängig von der Betätigungsstellung und/oder auch von der Zeit. Bspw. kann die Gegenkraft durch den Motor 30 in zeitlich variabler Weise so aufgebracht werden, dass sie als Vibration wahrzunehmen ist, z. B. mit einem zeitlich periodisch variierenden Verlauf. Eine andere zeitlich variable Signalisierungsmöglichkeit ist ein "Anklopfen", bei dem pulsförmige Kraftverläufe vorgegeben werden, wobei zwischen den Kraftpulsen für im Vergleich zur kurzen Dauer der Kraftpulse längere Zeitdauern keine Kraft aufgebracht wird.

Was verschiedene von der Betätigung abhängige Verläufe angeht, so ist bspw. ein ein- oder mehrstufiger Kickdown darstellbar, d. h. eine übertretbare, deutlich spürbare Kraftspitze. Davon kann eine Kraftspitze an einer festen Betätigungsstellung oder variablen Betätigungsstellung im mittleren Bereich der Betätigung erzeugt werden, bspw. um einen Bereich verbrauchsgünstigen Betriebs zu signalisieren. Alternativ kann eine variable Kraftstufe dargestellt werden, wobei der Motor mit einer konstanten Gegenkraft ab einer vorgegebenen Betätigungsstellung zugeschaltet wird. Je nach gewünschtem Zweck der Signalisierung sind so sehr verschiedene Verläufe denkbar.

Die jeweilige Pedalstellung wird über einen induktiven Sensor 28 am Drehhebel 32 abgefragt. Dabei ist am Drehhebel 32 ein induktives Indexelement, bevorzugt in Form eines Schwingkreises, auch als "Puck" bezeichnet, vorgesehen. Dem gegenüber ist am Gehäuse der aktiven Kassette 26 ein induktiver Spulenschaltkreis 28 mit mindestens einer Sende- und mindestens einer Empfangsspule vorgesehen. Die Stellung des Drehhebels 32 kann dabei durch die variable induktive Überkopplung von der Sende- in die Empfangsspule ermittelt werden. Ein entsprechender Sensor ist bspw. in der WO 03/038379 offenbart. Das ermittelte Sensorsignal wird über den Steckeranschluss 18 als digitales oder analoges elektrisches Signal abgegeben und kann bspw. von einer Motorsteuereinheit ECU abgefragt werden.

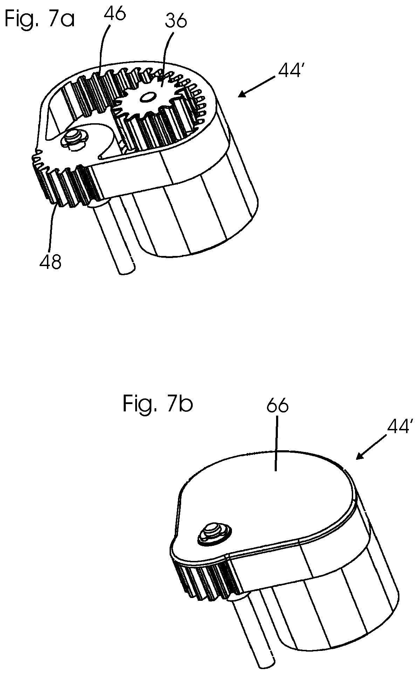

In Fig. 7a, 7b ist eine zweite Ausführungsform des speziell ausgebildeten Zahnradelements 44' dargestellt, das im Eingriff mit dem Ritzel 36 an der Motorwelle steht.

Während die bevorzugte Ausführung zur Stabilisierung einen Deckel 66 aufweist, wie in Fig. 7b gezeigt, wird aus der offenen Darstellung in Fig. 7a der Aufbau des Zahnradelements 44' ersichtlich. Dieses verfügt über einen ersten Verzahnungsbereich 46, der als Innenverzahnung mit einem großen, ersten Verzahnungsradius ausgebildet ist und über einen zweiten Verzahnungsbereich 48, der als Außenverzahnung mit einem zweiten, erheblich kleineren Verzahnungsradius ausgebildet ist. Die Innenverzahnung 46 ist dabei an einem Rahmenelement befestigt, das mit dem Deckel 66 verschlossen ist.

Der erste Verzahnungsbereich 46 steht dabei im Eingriff mit dem Ritzel 36, während der zweite Verzahnungsbereich 48 mit dem Verzahnungshebel 52 (in Fig. 7a, 7b nicht dargestellt) in Eingriff steht.

Das Zahnradelement 44' gemäß der alternativen Ausführungsform ersetzt somit das Zahnradelement 44 der vorbeschriebenen Ausführung und sorgt ebenso wie dieses für eine untersetzte Kopplung zwischen dem Ritzel 36 und dem Verzahnungshebel 52, wobei die beiden Verzahnungsbereiche 46, 48 jeweils nur über Teilumfänge vorhanden sind und beide in einer gemeinsamen Ebene liegen.

Zu der gezeigten Ausführungsform sind verschiedene weitere Abwandlungen möglich. Zum einen kann statt des sechs-poligen BLDC-Motors 30 ebenso ein anderer Motortyp verwendet werden, zum anderen kann das Getriebe 40, dass im vorliegenden Beispiel als zweistufiges Stirnrad-Untersetzungsgetriebe (in der Alternative mit einer Innenverzahnung) ausgebildet ist, für andere Anwendungsfälle auch anders ausgelegt bzw. konstruiert sein. Es kann zusätzlich ein Sensor für die Stellung des Koppelelements 50 vorgesehen sein. Die Feder 58 am Getriebe 40 kann auch am Ritzel 36 angreifen und bspw. als Spiralfeder ausgebildet sein. Schließlich kann die Pedaleinheit 10 alternativ auch als hängende Pedaleinheit aufgebaut sein.

## Patentansprüche

1. Pedaleinheit mit
- einem Pedalelement (14), das gegenüber einem Grundelement (12) in einer Betätigungsrichtung auslenkbar ist,
- wobei ein Drehelement (32) so mit dem Pedalelement (14) gekoppelt ist, dass es sich bei Auslenkung des Pedalelements (14) dreht,
- und wobei ein Elektromotor (30) zur Erzeugung einer Gegenkraft vorgesehen ist,
**dadurch gekennzeichnet, dass**
- das Drehelement (32) über ein Getriebe (40) mit dem Elektromotor (30) gekoppelt ist,
- wobei das Getriebe (40) als Zahnradgetriebe ausgebildet ist mit mindestens einem Zahnradelement (44, 44'), das mindestens einen ersten Verzahnungsbereich (46) mit einem ersten Verzahnungsradius und einem zweiten Verzahnungsbereich (48) mit einem zweiten Verzahnungsradius aufweist, wobei der erste und zweite Verzahnungsradius unterschiedlich sind,
- wobei sich der erste und der zweite Verzahnungsbereich (46, 48) jeweils nur über einen Teilumfang erstrecken,
- und wobei der erste und zweite Verzahnungsbereich (46, 48) in einer Ebene liegen.

2. Pedaleinheit nach Anspruch 1, bei der
- das Getriebe (40) mindestens ein erstes und ein zweites Zahnradelement (44, 52) aufweist, bei denen sich jeweils ein Verzahnungsbereich (46, 48) nur über einen Teilumfang erstreckt.

3. Pedaleinheit nach Anspruch 2, bei der
- das zweite Zahn radelement (52) eine Ausnehmung (60) aufweist,
- wobei in einer Getriebestellung ein Ende (49) des Verzahnungsbereichs des ersten Zahn radelements (44) in der Ausnehmung (60) aufgenommen ist.

4. Pedaleinheit nach einem der vorangehenden Ansprüche, bei der
- das Getriebe (40) ein Untersetzungsgetriebe ist, so dass eine höhere Drehzahl am Motor (30) in eine geringere Drehzahl am Drehelement (32) umgesetzt wird.

5. Pedaleinheit nach einem der vorangehenden Ansprüche, bei der
- das Getriebe (40) eine erste Zahnradpaarung zwischen einem Ritzel (36) des Motors (30) und einem ersten Zahnradelement (44, 44'),
- und eine zweite Zahnradpaarung zwischen dem ersten Zahnradelement (44, 44') und einem zweiten Zahnradelement (52) aufweist.

6. Pedaleinheit nach Anspruch 5, bei der
- das zweite Zahnradelement (52) mit dem Drehelement (32) gekoppelt ist.

7. Pedaleinheit nach einem der vorangehenden Ansprüche, bei der
- mindestens eine Stufe des Getriebes (40) mit einer mindestens teilweise schrägen Verzahnung versehen ist.

8. Pedaleinheit nach einem der vorangehenden Ansprüche, bei der
- ein Freilauf-Kopplungselement (42) im Kraftfluss zwischen dem Drehelement (32) und dem Motor (30) vorgesehen ist,
- wobei das Drehelement (32) mit dem Motor (30) so gekoppelt ist, dass eine Gegenkraft entgegen der Betätigungsrichtung vom Motor (30) auf das Drehelement (32) wirken kann,
- und das Drehelement (32) gegenüber dem Motor (30) Freilauf hat, so dass keine Betätigungskraft in Betätigungsrichtung vom Motor (30) auf das Drehelement (32) wirkt.

9. Pedaleinheit nach Anspruch 8, bei der
- das Freilauf-Kopplungselement (42) auf einer mit dem Drehelement (32) gekoppelten Seite eine Abtriebs-Anlagefläche aufweist und auf einer mit dem Motor (30) gekoppelten Seite eine Antriebs-Anlagefläche,
- wobei bei einer Kraftübertragung entgegen der Betätigungsrichtung die Anlageflächen aneinander anliegen.

10. Pedaleinheit nach Anspruch 9, bei der
- das Freilauf-Kopplungselement (42) mindestens ein Gabelelement aufweist, an dem mindestens eine der Anlageflächen gebildet ist.

11. Pedaleinheit nach einem der vorangehenden Ansprüche, bei der
- mindestens ein Verzahnungsbereich (46) des Zahnradelements (44') als Innenverzahnung ausgebildet ist.

12. Pedaleinheit nach einem der vorangehenden Ansprüche, bei der
- mindestens ein Teil des Freilauf-Kopplungselements (42) mit einem Zahnradelement (52) einstückig ausgebildet ist.

13. Pedaleinheit nach einem der vorangehenden Ansprüche, bei der
- der Elektromotor als BLDC-Motor (30) vorgesehen ist.

14. Pedaleinheit nach einem der vorangehenden Ansprüche, bei der
- ein Pedalsensor (28) zur Ermittlung der Stellung des Pedalelements (14) am Drehelement (32) vorgesehen ist.

## Claims

1. A pedal unit with
- a pedal element (14) that can be moved relative to a base element (12) in an actuation direction,
- wherein a rotary element (32) is coupled with the pedal element (14) such that it rotates when the pedal element (14) is moved,
- and wherein an electric motor (30) is provided to generate a counter-force,
**characterized in that**
- the rotary element (32) is coupled to the electric motor (30) by means of a gearing mechanism (40),
- wherein said gearing mechanism (40) is configured as a gear drive with at least one gear wheel element (44, 44'), which has at least one first gearing region (46) with a first gearing radius and a second gearing region (48) with a second gearing radius, wherein the first and second gearing radii are different,
- wherein each of the first and the second gearing regions (46, 48) extends only over a partial circumference,
- and wherein the first and the second gearing regions (46, 48) lie in one plane.

2. The pedal unit according to claim 1, in which
- the gearing mechanism (40) has at least one first and one second gear wheel element (44, 52), and a gearing region (46, 48) in each element extends only over a partial circumference.

3. The pedal unit according to claim 2, in which
- the second gear wheel element (52) has an aperture (60),
- wherein, in one gear position, an end (49) of the gearing region of the first gear wheel element (44) is accommodated in the aperture (60).

4. The pedal unit according to one of the preceding claims, in which
- the gearing mechanism (40) is a reduction gear, and so a higher speed in the motor (30) is converted to a lower speed on the rotary element (32).

5. The pedal unit according to one of the preceding claims, in which
- the gearing mechanism (40) has a first gear pair between a pinion (36) of the motor (30) and a first gear wheel element (44, 44'),
- and has a second gear pair between the first gear wheel element (44, 44') and a second gear wheel element (52).

6. The pedal unit according to claim 5, in which
- the second gear wheel element (52) is coupled with the rotary element (32).

7. The pedal unit according to one of the preceding claims, in which
- at least one stage of the gearing mechanism (40) is provided with a toothing being at least partially oblique.

8. The pedal unit according to one of the preceding claims, in which
- a freewheel clutch element (42) is provided in the power flow between the rotary element (32) and the motor (30),
- wherein the rotary element (32) is coupled with the motor (30) such that a counter-force from the motor (30) can act upon the rotary element (32) counter to the actuation direction.
- and the rotary element (32) can freewheel relative to the motor (30), and so an actuating force from the motor (30) does not act upon the rotary element (32) in the actuation direction.

9. The pedal unit according to claim 8, in which
- the freewheel clutch element (42) has an output contact surface on a side that is coupled with the rotary element (32) and has a drive contact surface on a side that is coupled with the motor (30),
- wherein the contact surfaces rest against each other when force is transmitted counter to the actuation direction.

10. The pedal unit according to claim 9, in which
- the freewheel clutch element (42) has at least one fork element, on which at least one of the contact surfaces is formed.

11. The pedal unit according to one of the preceding claims, in which
- at least one gearing region (46) of the gear wheel element (44') is configured as internal toothing.

12. The pedal unit according to one of the preceding claims, in which
- at least a part of the freewheel clutch element (42) is configured integrally with a gear wheel element (52).

13. The pedal unit according to one of the preceding claims, in which
- the electric motor is configured as a BLDC motor (30).

14. The pedal unit according to one of the preceding claims, in which
- a pedal sensor (28) is provided on the rotary element (32) to detect the position of the pedal element (14).

## Revendications

1. Unité de pédale, avec
- un élément de pédale (14) qui peut être déplacé dans une direction d'actionnement par rapport à un élément de base (12),
- un élément rotatif (32) étant couplé à l'élément de pédale (14) de telle sorte qu'il tourne lors du déplacement de l'élément de pédale (14),
- et un moteur électrique (30) étant prévu pour la production d'une force antagoniste,
**caractérisée en ce que**
- l'élément rotatif (32) est couplé au moteur électrique (30) par le biais d'une transmission (40),
- la transmission (40) étant constituée en tant que transmission par engrenages avec au moins un élément à roues dentées (44, 44') qui présente au moins une première zone de denture (46) avec un premier rayon de denture et une deuxième zone de denture (48) avec un deuxième rayon de denture, le premier et le deuxième rayon de denture étant différents,
- la première et la deuxième zone de denture (46, 48) ne s'étirant respectivement que sur une partie de la circonférence,
- et la première et la deuxième zone de denture (46, 48) étant situées dans un même plan.

2. Unité de pédale selon la revendication 1, dans laquelle
- la transmission (40) présente au moins un premier et un deuxième élément à roues dentées (44, 52) dans lesquels respectivement une zone de denture (46, 48) ne s'étend que sur une partie de la circonférence.

3. Unité de pédale selon la revendication 2, dans laquelle
- le deuxième élément à roues dentées (52) présente un creux (60),
- une extrémité (49) de la zone de denture du premier élément à roues dentées (44) étant reçue dans le creux (60) dans une position de la transmission.

4. Unité de pédale selon l'une des revendications précédentes, dans laquelle
- la transmission (40) est un engrenage réducteur de telle sorte qu'une vitesse de rotation accrue sur le moteur (30) est convertie en une vitesse de rotation plus faible sur l'élément rotatif (32).

5. Unité de pédale selon l'une des revendications précédentes, dans laquelle
- la transmission (40) présente un premier appariement de roues dentées entre un pignon (36) du moteur (30) et un premier élément à roues dentées (44, 44'),
- et un deuxième appariement de roues dentées entre le premier élément à roues dentées (44, 44') et un deuxième élément à roues dentées (52).

6. Unité de pédale selon la revendication 5, dans laquelle
- le deuxième élément à roues dentées (52) est couplé à l'élément rotatif (32).

7. Unité de pédale selon l'une des revendications précédentes, dans laquelle
- au moins un étage de la transmission (40) est muni d'une denture au moins partiellement oblique.

8. Unité de pédale selon l'une des revendications précédentes, dans laquelle
- un élément d'accouplement à roue libre (42) est prévu dans le flux de force entre l'élément rotatif (32) et le moteur (30),
- l'élément rotatif (32) est couplé au moteur (30) de telle sorte qu'une force antagoniste peut agir sur l'élément rotatif (32) à l'inverse de la direction d'actionnement du moteur (30),
- et l'élément rotatif (32) a une roue libre par rapport au moteur (30) de telle sorte qu'aucune force d'actionnement n'agit sur l'élément rotatif (32) dans la direction d'actionnement à partir du moteur (30).

9. Unité de pédale selon la revendication 8, dans laquelle
- l'élément d'accouplement à roue libre (42) présente une face d'appui entraînée sur un côté couplé à l'élément rotatif (32) et une face d'appui d'entraînement sur un côté couplé au moteur (30),
- les faces d'appui étant adjacentes lors d'une transmission de force à l'inverse de la direction d'actionnement.

10. Unité de pédale selon la revendication 9, dans laquelle
- l'élément d'accouplement à roue libre (42) présente au moins un élément de fourche sur lequel est formée au moins une des faces d'appui.

11. Unité de pédale selon l'une des revendications précédentes, dans laquelle
- au moins une zone de denture (46) de l'élément à roues dentées (44') est constituée en tant que denture intérieure.

12. Unité de pédale selon l'une des revendications précédentes, dans laquelle
- au moins une partie de l'élément d'accouplement à roue libre (42) est constituée d'un seul tenant avec un élément à roues dentées (52).

13. Unité de pédale selon l'une des revendications précédentes, dans laquelle
- le moteur électrique est prévu en tant que moteur BLDC (30).

14. Unité de pédale selon l'une des revendications précédentes, dans laquelle
- un capteur de pédale (28) est prévu pour déterminer la position de l'élément de pédale (14) sur l'élément rotatif (32).
